# EUROPÄISCHE PATENTSCHRIFT

(11) **EP 0 960 151 B1**
(45) Veröffentlichungstag und Bekanntmachung des Hinweises auf die Patenterteilung: **11.09.2002**
(21) Anmeldenummer: 98908082.5
(22) Anmeldetag: 11.02.1998
(51) Int. Cl.: C08G 63/78, C08G 63/81, C08J 3/20, C08J 3/16

(54) **KUGELFÖRMIGE, GEFÄRBTE POLYESTERPARTIKEL, VERFAHREN ZU DEREN HERSTELLUNG UND IHRE VERWENDUNG FÜR PULVERLACKE**
BALL-SHAPED POLYESTER PARTICLES, PRODUCTION THEREOF AND USE OF SAME FOR POWDER LACQUERS
PARTICULES DE POLYESTER DE FORME SPHERIQUE, MODE DE FABRICATION ET APPLICATION POUR LES LAQUES EN POUDRE

(30) Priorität: 17.02.1997 DE 19705962
(43) Veröffentlichungstag der Anmeldung: 01.12.1999
(73) Patentinhaber: E.I. du Pont de Nemours & Company, Wilmington, Delaware 19898 (US)
(72) Erfinder: BLATTER, Karsten, D-65817 Eppstein (DE); SIMON, Peter, D-65817 Eppstein (DE)
(74) Vertreter: Biering, Christine
(86) Internationale Anmeldenummer: EP9800748
(87) Internationale Veröffentlichungsnummer: WO98036011

(56) Entgegenhaltungen:
- EP-A- 0 751 166
- FR-A- 2 233 351

## Beschreibung

Die vorliegende Erfindung betrifft homogen gefärbte, kugelförmige Polyesterpartikel mit Partikelgrößen < 50 µm dadurch gekennzeichnet, daß die Polymerpartikel einen vernetzbaren funktionellen Polyester und mindestens ein mehrfunktionelles Vernetzungsmittel oder ein Epoxidharz enthalten, die bei Temperaturen < 200 °C einen kontinuierlichen Überzug bilden, ein Verfahren zu deren Herstellung und ihre Verwendung als Pulverlacke.

Pulverlacke bestehen in der Regel aus einem ggf. vernetzbaren, filmbildenden Polymer, Additiven wie z.B. Fließverbesserer oder Entgasungshilfsmitteln, sowie im Fall von gefärbten Pulverlacken aus Pigmenten und gegebenenfalls Füllstoffen.

Pulverlacke werden traditionell hergestellt, indem man die obengenannten Komponenten in einem Extruder bei einer Temperatur oberhalb der Erweichungstemperatur des filmbildenden Polymers, aber unterhalb der Vernetzungstemperatur intensiv vermischt und das resultierende Extrudat anschließend durch einen Mahlprozeß auf eine mittlere Korngröße von ca. 40 bis 70 µm bringt. Der Mahlprozeß führt zu Pulvern mit irregulärer Struktur, die dazu führt, daß Pulver mit einer mittleren Partikelgröße von deutlich weniger als 30 µm nicht mehr nach dem in der Pulverlackverarbeitung üblichen elektrostatischen Sprühverfahren verarbeitet werden können. Beispielsweise wird in EP-A-0 459 048 erwähnt, daß sich Pulverlackzusammensetzungen mit einer Partikelgröße von weniger als 15 µm nicht nach dem elektrostatischen Sprühverfahren verarbeiten lassen.

Die im Stand der Technik verwendeten Mahlpulver haben einen mittleren Partikeldurchmesser von etwa 40 bis 70 µm und ergeben typischerweise eine Beschichtungsdicke von 40 bis 70 um. Die Mahltechnologie erzeugt prinzipiell eine sehr breite Partikelgrößenverteilung. Zusätzlich beobachtet man eine Verbreiterung dieser Verteilung mit zunehmender Feinheit der Pulver.

Zur Charakterisierung der Breite einer Partikelgrößenverteilung werden neben der Größe d50, für die gerade 50 % der Partikel größer bzw. kleiner als der Wert d50 sind, noch zwei weitere Größen herangezogen: Mit d10 wird die Partikelgröße bezeichet, für die 10% der Partikel kleiner als dieser Grenzwert sind. Entsprechend bezeichnet man mit d90 die Partikeigröße, für die 90% der Partikel feiner als der Wert d90 sind. Zur Charakterisierung der Breite einer Partikelgrößenverteilung wird in der Regel ein Quotient gebildet, der als Span bezeichnet wird und nach folgender Formel berechnet wird: Span= d90-d10/d50. Es gilt: je kleiner der Span, desto enger die Partikelgrößenverteilung. Ein Pulver aus Kugeln identischer Größe hätte einen Span von 0. Für Mahlpulver nach dem Stand der Technik mit einer mittleren Partikelgröße d50 von 50 µm wird typischerweise ein Span von 3 - 4 erhalten.

Aufgrund von ökonomischen Überlegungen (geringerer Materialverbrauch) aber auch aufgrund von technischen Vorteilen (höhere Flexibilität der Beschichtung) ist eine geringere Schichtdicke für Pulverlacke wünschenswert. Eine geringere Schichtdicke ist nur durch eine Reduktion der Partikelgröße des Pulvers realisierbar. Dabei ist auch entscheidend, daß die Pulver eine möglichst enge Partikelgrößenverteilung aufweisen, da es ansonsten insbesondere bei hohen Feinanteil zu Verarbeitungsschwierigkeiten kommt.

Es hat daher in der Vergangenheit nicht an Versuchen gefehlt, durch neue Technologien eine Reduktion der Partikelgröße von Pulverlacken zu erzielen, ohne daß die oben erwähnten Nachteile in der Verarbeitbarkeit der Pulver auftreten. Ziel ist es in der Regel, Partikel mit einer möglichst perfekten Kugelform herzustellen, da solche Pulver ein wesentlich günstigeres Fließverhalten zeigen als die irregulären Mahlpulver. Beispielsweise wurde versucht, durch Versprühung von Polymerschmelzen möglichst kugelförmige Partikel herzustellen. Die in WO 92/00342 dargestellten Ergebnisse zeigen allerdings, daß dies nur mit mäßigem Erfolg gelingt. Die nach dieser Technik erhaltenen Partikel haben zwar im Vergleich zu Mahlpulvern eine glattere Oberfläche, von der Idealstruktur einer Kugel sind sie aber noch weit entfernt.

Ein weiteres Verfahren, das für die Herstellung von kugelförmigen Partikeln untersucht wurde, ist die Versprühung von Polymeren aus überkritischer Lösung, wie z.B. in EP-A-0 661 091 oder EP-A-0 792 999 beschrieben. Auch dieses Verfahren hat wesentliche Nachteile. Beispielsweise wird in den zitierten Anmeldungen festgestellt, daß aufgrund der schlagartigen Verdampfung des überkritischen "Lösungsmittels" ein Pulver erhalten wird, das eine poröse Struktur aufweist. Werden diese Pulver zur Herstellung von Filmen eingesetzt, so kommt es im Vergleich zu nicht porösen Pulvern vermehrt zur Blasenbildung und damit zu Defekten in der Beschichtung, da aufgrund der porösen Struktur eine große Menge Gas im Pulver eingeschlossen ist, das während des Filmbildungsvorgangs entfernt werden muß. Die Verwendung von überkritischen Lösungsmitteln ist zusätzlich technisch aufwendig, da beispielsweise unter hohen Drücken gearbeitet werden muß.

Ein prinzipiell anderes Verfahren zur Erzeugung kugelförmiger Partikel ist die Erzeugung einer Dispersion. Aufgrund physikalischer Gesetzmäßigkeiten ist in einer Dispersion die perfekte Kugelform die bevorzugte Geometrie der erhaltenen Teilchen. Unter geeigneten Bedingungen gelingt es, kugelförmige Partikel mit einer sehr engen Partikelgrößenverteilung herzustellen.

Es hat daher in der Vergangenheit nicht an Versuchen gefehlt, Polymerpartikel, die sich als Bindemittel in Lacksystemen, bevorzugt in sogenannten "high solid" Flüssiglacksystemen, einsetzen lassen, durch Herstellung in Dispersion zu erhalten (Keith. Barett, Dispersion Polymerization in Organic Media, John Wiley & Sons, London, 1975). Beispielsweise beschreibt GB- 1 373 531 die Herstellung stabiler Dispersionen von Polykondensationspolymeren, wie z.B. Polyester.

Die Möglichkeit der Verwendung der Polymerpartikel aus nichtwässrigen Dispersionsverfahren, insbesondere auf Basis Polyester, als Pulverlack wird in DE-C-21 52515 erwähnt. Hier wird ein bereits fertiges Polymer bei einer Temperatur < 200°C in Dispersion gebracht und durch Zugabe von Pigmenten, bevorzugt nach Abkühlung der Dispersion unter den "Verfestigungspunkt" der Polymerpartikel, eine Anfärbung erreicht. Die erhaltenen Partikel werden als weitestgehend sphärische "Aggregate" aus primären Polymerteilchen mit einer Teilchengröße von 0,05 bis 20 µm und Pigmentpartikeln beschrieben. Die als "sekundäre Teilchen" beschriebenen Aggregate weisen eine Partikelgröße von 10 bis 90 µm bzw. 100 bis 300µm auf und werden durch Versprühen der Dispersion erhalten. Bei dem beschriebenen Verfahren erfolgt die Zugabe von Pigmenten bei Raumtemperatur oder nur leicht erhöhter Temperatur, was dazu führt, daß die Pigmentpartikel nur lose an die Polymerpartikel gebunden sind, was erfahrungsgemäß zu Problemen bei der Pulververarbeitung führt, da eine Separation der Pigmente vom polymeren Bindemittel stattfindet. Die Möglichkeit, Pigmente bei höherer Temperatur vor Verfestigung des Bindemittels zuzugeben wird als schwierig und nicht bevorzugt beschrieben, da es zu einer Änderung der Partikelgröße kommen kann.

Es werden auch keine Wege aufgezeigt, wie Pulverlacksysteme hergestellt werden können, die bei den gewünschten tiefen Temperaturen zwischen 120 und 200°C vernetzen. Die erwähnten vernetzenden Systeme besitzen alle eine Vernetzungstemperatur, die oberhalb der Temperatur liegt, die zur Dispergierung benötigt wird.

Der in DE-C-21 52 515 beschriebene Einsatz eines bereits zu hohen Molekulargewichten kondensierten Polymers als Ausgangsprodukt für die Dispersionsherstellung hat außerdem folgende Nachteile: Durch die bereits beträchtliche Viskosität der Polymere, die bei den kommerziell verwendeten Polymeren im Bereich von 3000 bis 20 000 mPas (bei 200 °C) liegt, ist es schwierig, eine gute Zerteilung der Schmelze zu erzielen und eine homogene Partikelgrößenverteilung zu erhalten.

Aufgabe der vorliegenden Erfindung ist es somit, homogen gefärbte, kugelförmige Polyesterpartikel mit einer möglichst kleinen Partikelgröße und einer engen Partikelgrößenverteilung bereitzustellen, bei denen bei der Pulververarbeitung keine Separation der Pigmente vom polymeren Bindemittel stattfindet und die bereits bei niedrigen Temperaturen zu einem kontinuierlichen Überzug verarbeitet werden und gegebenenfalls vernetzt werden können und sich somit für die Verwendung als Pulverlacke eignen.

Die vorliegende Erfindung löst diese Aufgabe und betrifft homogen gefärbte, kugelförmige, nicht poröse, vernetzbare Polyesterpartikel mit einer mittleren Partikelgröße von < 50 µm und einer monomodalen Partikelgrößenverteilung (d90-d10/d50) ≤ 2,5 , die bei Temperaturen < 200 °C zu einem kontinuierlichen Überzug aufgeschmolzen werden können.

Die erfindungsgemäßen homogen gefärbten, kugelförmigen, gegebenenfalls vernetzbaren Polyesterpartikel werden hergestellt indem man
a. die Ausgangsstoffe für ein Polyesterbindemittel in einem inerten hochsiedenden Wärmeträger, der maximal 2 Gew% aromatische Bestandteile enthält bei einer Temperatur, die mindestens so hoch ist wie die Erweichungstemperatur der Ausgangsstoffe in Gegenwart mindestens eines polymeren, vorzugsweise organischen, Dispersionsstabilisators, der ein amphiphiles copolymer oder eine oberflächenmodifizierte anorganische Verbindung ist, dispergiert und
b. anschließend die Reaktionsmischung auf eine Temperatur im Bereich von 120 bis 280°C. unter gleichzeitiger Abführung der Kondensationsnebenprodukte, erhitzt, bis der Polyester ein Molekulargewicht im Bereich von 500 bis 20 000 besitzt;
c. darauffolgend im Temperaturbereich im Bereich von 140 bis 220°C Farbstoffe, Pigmente und/oder Füllstoffe sowie gegebenenfalls weitere Additive zugibt;
d. die Reaktionsmischung im Falle eines vernetzbaren funktionellen Polyesters danach auf eine Temperatur im Bereich von 60 bis 140°C abkühlt und mindestens ein mehrfunktionelles Vernetzungsmittel oder Epoxidharz zugibt und
e. anschließend die Temperatur in einen Bereich, der unterhalb der Erweichungstemperatur des Polyesters liegt absenkt und die erhaltenen homogen gefärbten, kugelförmigen Polyesterpartikel abtrennt.

Als Ausgangsstoffe werden vorzugsweise Oligoester mit einer Viskosität von weniger als 1000 mPas (gemessen bei 200° C), insbesondere ≤ 500 mPas, eingesetzt, die Einheiten der Formeln (1) und (2) enthalten,

-CO-X-CO (1) -O-D-O- (2)

wobei
X für einen substituierten oder unsubstituierten C₆ bis C₁₄-aromatischen Rest oder einen Akylen-, Polymethylen-, Cycloalkan- oder Dimethylen-cycloalkangruppe oder eine geradkettige oder verzweigte, ggf. ungesättigte Alkandiyl-Gruppe steht und D eine Alkylen-, Polymethylen-, Cycloalkan-, Dimethylen-cycloalkangruppe oder eine geradkettige oder verzweigte, gegebenenfalls ungesättigte Alkandiyl-Gruppe bedeutet.

Es wird aus Gründen der Zeitersparnis bevorzugt, zunächst in der Schmelze Oligoester der oben beschriebenen Zusammensetzung herzustellen, indem man die Carbonsäurekomponenten, wie z.B. Terephthalsäure, Isophthalsäure, Adipinsäure oder Fumarsäure, um nur einige zu nennen, in Form der Säure oder als niedermolekulare Alkylester zusammen mit den Diolkomponenten, wie z.B. Ethylenglycol, Diethylenglycol, Neopentylglycol oder bis-Hydroxymethylcyclohexan, in der Schmelze in Gegenwart eines Umesterungkatalysators, wie z.B. Manganacetat oder Zink- oder Zinnsalzen erhitzt, bis der größte Teil der Kondensationsprodukte Wasser bzw. der niedrigen Alkanole abdestilliert ist. Dabei wird aber kein signifikanter Anstieg der Viskosität der Schmelze festgestellt. Bei 200°C ist die Viskosität immer < 1000 mPas.

Ein solches Oligomerengemisch kann z.B. direkt bei erhöhter Temperatur durch Vereinigung mit Wärmeträgeröl und Dispergator in eine erfindungsgemäße Dispersion überführt werden. Dieses Verfahren ist für eine großtechnische Herstellung bevorzugt. Es ist aber auch möglich, das Oligomerengemisch zur Lagerung abzukühlen und später wieder aufzuheizen. Generell ist es auch möglich, bereits die Herstellung der Oligomeren in der Dispersion durchzuführen.

In einer praktischen Ausführungsform des erfindungsgemäßen Verfahrens werden die Ausgangsstoffe, bevorzugt als Oligomerengemisch, in Schritt (a) in einem inerten hohsiedenden Wärmeträger gemischt, die Mischung auf eine erhöhte Temperatur, die oberhalb der Erweichungstemperatur der Ausgangsstoffe liegen muß, zweckmäßiger Weise im Bereich von 150 bis 280°C, erhitzt und dann mindestens ein Dispersionsstabilisator oder ein Dispersionsstabilisator-Gemisch eingerührt.

Als Wärmeträger (Dispersionsmedium) haben sich aliphatische Wärmeträgeröle mit einem Siedepunkt im Bereich von 150 bis 300°C als besonders geeignet erwiesen. Solche Wärmeträgeröle sind -im technischen Sinne- frei von aromatischen Baugruppen, d.h. sie enthalten maximal 2 Gew.%, vorzugsweise maximal 1 Gew.%, aromatische Bestandteile.
Aufgrund der geringen Polarität dieser Öle, die beispielsweise von der Exxon Chemical unter dem Handelsnamen ®Isopar, ®Exxsol oder ®Norpar angeboten werden, werden die Polyester nicht angequollen. Dieses Problem tritt teilweise für aromatische Öle auf, die prinzipiell für das Dispersionsverfahren gleichfalls geeignet sind.

Generelle Regeln für das Design von geeigneten polymeren Dispersionsstabilisatoren werden in "Keith. Barett, Dispersion Polymerization in Organic Media, John Wiley & Sons, London, 1975" auf den Seiten 45 bis 110 gegeben. Hauptanforderungen sind eine Löslichkeit des polymeren Dispersionsstabilisators in dem verwendeten Dispergiermedium, sowie polare oder reaktive Gruppen, die eine starke Wechselwirkung mit den zu dispergierenden Teilchen ermöglichen.

Bevorzugt werden für das erfindungsgemäße Verfahren amphiphile Copolymere oder oberflächenmodifizierte anorganische Verbindungen eingesetzt. Dies sind z.B. mit Trialkylammoniumsalzen oberflächenmodifizierte Schichtsilikate, insbesondere mit Trialkylammoniumsalzen oberflächenmodifiziertes Bentonit, oder amphiphile Copolymere aus einer polaren Polymereinheit, z.B. Poly-N-Vinylpyrrolidon und einer unpolaren Polymereinheit, z.B. langkettigen α-Olefinen, beispielsweise 1-Eicosen.

Derartige amphiphile Copolymere werden von der Firma ISP Global unter dem Handelsnamen ®Antaron angeboten und haben sich als besonders geeignet erwiesen. Antaron wurde, wie z.B. in EP-B-0 392 285 beschrieben, auch bereits erfolgreich bei tieferen Temperaturen zur Stabilisierung von Polyurethan-Dispersionen eingesetzt. Es hat sich gezeigt, das Antaron aber auch vorteilhaft bei Temperaturen bis 300°C eingesetzt werden kann und eine ausgezeichnete Stabilität der Dispersionen ergibt.

Der Gehalt an Dispersionsstabilisator liegt erfindungsgemäß im Bereich von 0.1 bis 6 Gew.% bezogen auf die Polyester-Ausgangsstoffe, bevorzugt im Bereich von 0.3 bis 4 Gew.%, insbesondere im Bereich von 0.5 bis 2 Gew.%, um Partikel mit der gewünschten Partikelgröße zu erhalten.

In einem anschließenden Schritt (b) wird die Reaktionsmischung weiter auf eine Temperatur im Bereich von 120 bis 280°C, insbesondere von 200 bis 250°C erhitzt, wobei die entstehenden Kondensationsnebenprodukte parallel abgeführt werden. Die Temperatur wird so lange beibehalten, bis der Polyester das gewünschte Molekulargewicht, das üblicherweise im Bereich von Mn= 500 bis 20 000 liegt, vorzugsweise im Bereich von 1000 bis 10 000, erreicht hat. Entscheidend für das Molekulargewicht ist die Dauer der Reaktion, die durch Probennahme verfolgt werden kann.

Zur Erhöhung der Funktionalität des Polyesters können für vernetzbare Systeme nach Erreichung des notwendigen Molekulargewichtes anschließend an Schritt (b) mehrfunktionelle Komponenten zugegeben werden.
Beispielsweise werden bei der gleichen Reaktionstemperatur mehrfunktionelle Carbonsäuren oder Alkohole wie z.B. Trimellitsäureanhydrid zugegeben und noch einige Zeit weiter erhitzt um einen Einbau der zudosierten Komponenten sicherzustellen.

Nach Abschluß der Kondensation in Schritt (b) können ferner zur Optimierung der Beschichtungseigenschaften des Polyesters, die für eine optimale Oberflächengüte der Beschichtungen aus Pulverlacken gewünscht ist, Additive wie z.B. Fließhilfsmittel oder Entgasungshilfsmittel zugegeben werden. Dazu kühlt man die Mischung auf 160 bis 200°C ab und dosiert die gewünschten Additive unter gleichzeitigem Rühren der Reaktionsmischung zu. Die Zugabe der Additive kann entweder getrennt erfolgen oder mit der Zugabe der Farbstoffe und Pigmente kombinert werden.

Die in der Pulverlacktechnologie üblichen Additive wie Fließverbesserer oder Antischäummmittel können wie oben beschrieben zugesetzt werden, ohne daß negative Auswirkungen auf die Dispersionsstabilität oder die Teilchenbildung auftreten.

Anschließend (c) werden bei einer Temperatur, die deutlich oberhalb des Erweichungspunktes des Polyesters liegt, vorzugsweise im Bereich von 140°C bis 220°C, Füllstoffe, wie z.B. Kalziumcarbonat, Bariumsulfat, Titandioxid, Mica, Talkum, Dolomit oder Wollastonit sowie Farbstoffe und/oder Pigmente zur Einfärbung der Polyesterpartikel zugegeben.

Zur Einstellung der Farbe können alle handelsüblichen organischen oder anorganischen Pigmente oder Farbstoffe, die eine Temperaturbeständigkeit bis mindestens 200 °C bzw. bis zur Aushärtungstemperatur des Pulverlacksystems aufweisen, eingesetzt werden. Farbstoffe oder Pigmente, die die genannten Anforderungen erfüllen sind z.B. in "David A. Bate, "The science of powder coatings" Volume 1, SITA Technology, ISBN 0 947798005, aufgeführt. Gegebenenfalls können auch Mischungen verschiedener Pigmente oder Farbstoffe zur Einstellung der Farbe eingesetzt werden.

In einer erfindungsgemäß bevorzugten Ausführungsform werden die Farbstoffe, Pigmente und/oder Füllstoffe vor der Zugabe zu dem Reaktionsgemisch in Gegenwart zur Dispersion ausreichender Mengen an Dispersionsstabilisators, vorzugsweise in dem verwendeten Wärmeträger, dispergiert und auf die Temperatur der Reaktionsmischung vorgewärmt. Auf diese Weise ist es möglich, eine sehr homogene und intensive Anfärbung der Polyesterpartikel zu erreichen, die auch bei der Weiterverarbeitung der Pulver erhalten bleibt.

Anschließend wird die Reaktionsmischung auf eine Temperatur im Bereich von 60 bis 140°C, insbesondere von 80 bis 120°C abgekühlt und im Fall eines vernetzbaren funktionellen Polyesters mindestens ein mehrfunktionelles Vernetzungsmittel oder ein Epoxidharz zugegeben. Durch dieses Verfahren gelingt es, die Vernetzungsreaktion soweit zu vermeiden, daß die aus den Pulvern erhaltenen Überzüge die üblichen Gelzeiten von 2 bis 5 Minuten bei der Einbrenntemperatur (z.B. 180°C) haben. Die erfindungsgemäßen Pulverlacke unterscheiden sich somit hinsichtlich der Einbrenntemperaturen und Gelzeiten nicht von herkömmlichen Systemen, die durch Extrusion und Mahlen erhalten werden.

Die erfindungsgemäßen Polyester enthalten funktionelle Gruppen, die nachträglich vernetztbar sind.

Die Carboxylgruppen von funktionellen Polyestern können so beispielsweise mit Epoxiden vernetzt werden. Beispiele für übliche Zusammensetzungen solcher Polyester werden in folgender Monographie gegeben: "David A. Bate, "The science of powder coatings" Volume 1, SITA Technology, ISBN 0 947798005, die hiermit explizit genannt wird. Als typische Rohstoffe für funktionelle Polyester können beispielsweise folgende Dicarbonsäuren bzw. ihre niedermolekularen Ester eingesetzt werden: Terephthalsäure, Isophthalsäure, Adipinsäure, Sebacinsäure, Phthalsäure, Fumarsäure. Als Diolkomponente können beispielsweise Ethylenglycol, Diethylenglycol, Neopentylglycol, Hexandiol, Bis-Hydroxymethylcyclohexan eingesetzt werden.

Ein Überblick über gebräuchliche Vernetzungsmittel für funktionelle Polyester sowie notwendige Additive wie z.B. Fließverbesserer wird in der vorstehend genannten Literaturstelle gegeben. Beispiele für typische Vernetzer sind Triglycidylisocyanurat (®Araldite PT 810), Epoxidharze auf Basis von Bisglycidyl- Bisphenol A oder auch β -Hydroxyalkylamide (wie z.B.® Primid XL 552).

Der Gehalt an Vernetzungsmittel beträgt üblicherweise 2 bis 20 Gew.%, bevorzugt 5 bis 10 Gew.% bezogen auf den Polyesteranteil, kann aber für sogenannten Epoxy/Polyester Hybridsysteme bis auf 50 Gew.% ansteigen.

Nach Zugabe des Vernetzungsmittels wird die Temperatur der Reaktionsmischung auf eine Temperatur, die unterhalb der Erweichungstemperatur des Polyesters liegt, vorzugsweise < 60 °C, abgesenkt.

Der Polyester fällt hierbei in Pulverform an. Die erhaltenen homogen gefärbten, kugelförmigen Polyesterpartikel werden von der überstehenden Reaktionslösung abgetrennt und gegebenenfalls gereinigt.

Die mit dem beschriebenen Verfahren erhaltenen Polyesterpartikel sind transparent und können mit beliebigem Molekulargewicht, z.B. im Bereich von Mn= 500 bis Mn = 50.000, hergestellt werden. Die Ausbeute beträgt >95%, in der Regel sogar > 98 % insbesondere, wenn die Reaktion im größeren Maßstab durchgeführt wird. Es gibt praktisch keine Anhaftungen im Reaktor, die zu einer Verminderung der Ausbeute führen würden.

Mit Hilfe des erfindungsgemäßen Verfahrens ist es möglich, homogen gefärbte, kugelförmige Polyesterpartikel mit einer mittleren Partikelgröße (d50) < 50 µm, vorzugsweise < 40 µm, insbesondere < 30 µm, und einer monomodalen Partikelgrößenverteilung (d90-d10/d50) von ≤ 2,5, insbesondere ≤ 2,0,vorzugsweise ≤ 1.5 zu erhalten.

Ferner zeichnen sich die erhaltenen Polyesterpartikel dadurch aus, daß sie nach Applikation auf eine geeignete Oberfläche bei Temperaturen unterhalb 200 °C, insbesondere bei Temperaturen im Bereich von 120 bis 200 °C, vorzugsweise 160 bis 200 °C, zu einem kontinuierlichen Überzug aufgeschmolzen werden können, der im Fall von vernetzbaren Polyestern bei diesen Temperaturen auch ausgehärtet werden kann.

Die erfindungsgemäßen kugelförmigen Polymerpartikel lassen sich aufgrund ihrer engen Partikelgrößenverteilung ausgezeichnet nach den üblichen Verfahren der Pulverlackbeschichtungstechnologie verarbeiten und ergeben homogen gefärbte Beschichtungen mit einer sehr guten Oberfläche. Im Vergleich zu den bekannten Pulvern kommt es bei den erfindungsgemäßen Polyesterpulvern bei der Verarbeitung zu Pulverlacküberzügen zu keiner Separation der Pigmentpartikel von den Polymerpartikel. Die auf diese Weise hergestellten Überzüge zeichnen sich daher durch eine sehr homogene, einheitliche Farbgebung und eine ausgezeichnete Deckkraft aus.
Im Vergleich zu konventionellen Pulvern, die üblicherweise eine Beschichtungsdicke von 50 bis 70 um ergeben, gelingt es, mit Hilfe der hier beschriebenen Polyesterpulver Schichten mit Dicken < 50 µm, vorzugsweise Beschichtungen mit Dicken im Bereich von 5 bis 40 µm, insbesondere 10 bis 35 µm, herzustellen.

Die nachfolgenden Beispiele sollen die Erfindung verdeutlichen:

### Beispiele

### Beispiel 1: Herstellung eines Oligomerengemisches als Ausgangsmaterial für die Pulverlackherstellung eines vernetzenden Polyesters

In einem 101-Vierhalsrundkolben werden 4090 g Dimethylterephthalat (21,06 mol), 888,4 g Dimethylisophthalat (4,58 mol), 2814 g Neopentylglykol (27,05 mol) und 1,5 g Mangan(II)acetat *4 Wasser als Katalysator eingewogen. Der Kolben wird mit einer Füllkörperkolonne (I = 10 cm) versehen mit Destillationsaufsatz verbunden. Die Reaktionsmischung wird nun unter Schutzgas auf 150 °C gebracht. Bei dieser Temperatur liegen alle Monomere als Schmelze vor. Gleichfalls setzt bei dieser Temperatur die Veresterung ein. Die Temperatur wird so gesteuert, daß die Kopftemperatur 75 °C nicht übersteigt. Innerhalb von 4h wird die Innentemperatur von 150 °C auf 225 °C erhöht, um das gebildete Methanol möglichst vollständig aus der Reaktionsmischung zu entfernen.
Es werden 6181, 1 g Oligomerengemisch und 1448, 8 g Methanol (theoretisch: 1640 g Methanol) isoliert.

### Beispiel 2: Herstellung eines Oligomerengemisches für thermoplastische Polyester

In einem 101-Vierhalsrundkolben werden 2475 g Dimethylterephthalat (12.75 mol), 2250 g Dimethylisophthalat (11,59 mol), 450 g Neopentylglykol (4,33 mol), 2500 g Ethylenglykol (40,28 mol), 252 g Diethylenglykol (2,37 mol) und 1,485 g Mangan(II)acetat * 4 Wasser eingewogen.
Unter Schutzgas wird die Reaktionsmischung auf eine Temperatur von 150 °C erwärmt. Bei dieser Temperatur sind alle Monomere aufgeschmolzen. Über eine Füllkörperkolonne (I = 10 cm) mit Destillationsbrücke wird das gebildete Methanol abdestilliert. Die Temperatur wird so gesteuert, daß die Kopftemperatur 75 °C nicht übersteigt. Es wird bis zu einer Reaktionsmischungstemperatur von 225 °C erwärmt, um das Methanol möglichst vollständig aus der Reaktionsmischung zu entfernen. Es wurden 1555 g Methanol (theoretisch 1557 g) abdestilliert. Nach dem Abkühlen auf Raumtemperatur wurden 6240 g hochviskoses Oligomerengemisch erhalten.

### Beispiel 3: Herstellung gefärbter vernetzbarer Pulverlacke

In einem 1 I Reaktor mit Wasserabscheider werden 225 g des in Beispiel 1 hergestellten Oligomerengemisches, 180 g Isopar P und 45 g Isopar L als Wärmeüberträgeröl, 88 mg Antimontrioxid als Veresterungskatalysator sowie die in Tabelle 1 angegebene Menge Antaron V 220 (ISP Global) als Dispergator (Antaron 1) eingewogen und die Mischung unter Intertgas erhitzt. Sobald alle Komponenten aufgeschmolzen sind (Innentemperatur ca. 150 °C), wird der Rührer eingeschaltet und die Mischung unter kräftigem Rühren bis zur Siedetemperatur des Wärmeträgeröls (ca.230°C) erhitzt. Man hält die Reaktionsmischung für 1h bei dieser Temperatur wobei geringe Mengen an Methanol und Neopentylglycol abdestillieren. Anschließend setzt man 16,5 g Trimellitsäureanhydrid zu und hält die Mischung für weitere 30 min. am Sieden. Es werden wenige ml an Destillat erhalten.

Anschließend entfernt man das Heizbad und läßt die Dispersion langsam abkühlen. Wenn die Innentemperatur im Bereich zwischen 200 und 160 °C liegt, dosiert man eine zuvor hergestellte und auf die gleiche Temperatur vorgewärmte Dispersion der in Tabelle 1 aufgeführten Mengen an Farbstoff, Pigment und Dispergator (Antaron 2), sowie der Hilfsstoffe ®BYK 360 P (3,4 g BYK Chemie) als Fließverbesserer und 0,9 g Benzoin als Entgasungshilfsmittel in Isopar L zu. Diese Dispersion wird durch Erwärmen aller Komponenten auf ca. 100 °C unter kräftiger Scherung erhalten.
Man läßt die Mischung anschließend auf eine Temperatur von 100 bis 120 °C abkühlen und dosiert in diesem Temperaturintervall 15,7 g Triglycidylisocyanurat (TGIC) zu. Nach Abkühlen auf Raumtemperatur wird das Pulver durch Filtration, Waschen mit niedrig siedenden Kohlenwasserstoffen und Trocknen isoliert.
Man erhält sehr gut rieselfähige, kugelförmige Pulver der in Tabelle 1 angegebenen Korngrößen, die sich nach den üblichen elektrostatischen Sprühverfahren zu Pulverlackbeschichtungen verarbeiten lassen. Nach Aushärten bei 180°C für 20 min. erhält man Beschichtungen mit guter Haftung und einer ausgezeichneten Oberflächengüte. Die erhaltenen Filmdicken sind in Tabelle 1 aufgeführt.

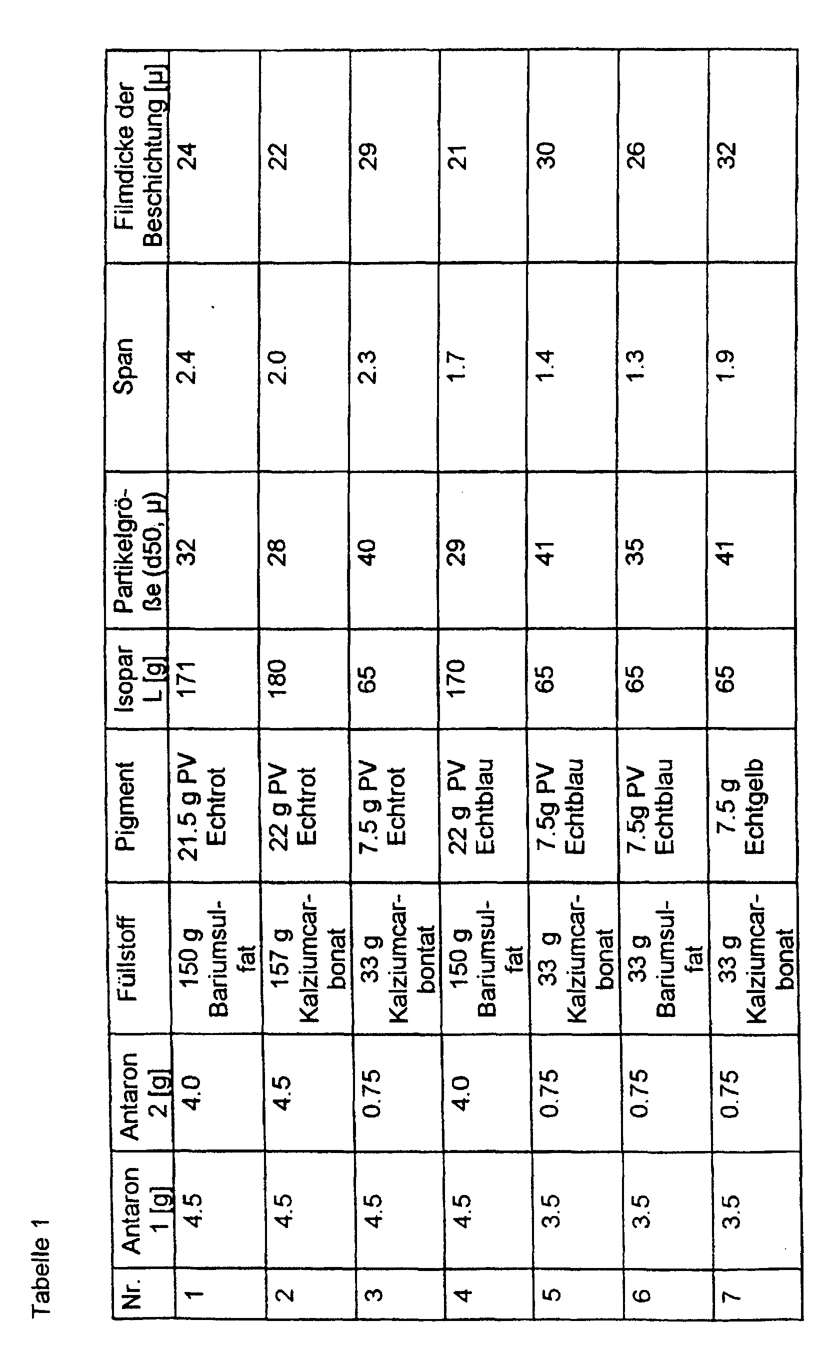

### Beispiel 4: Herstellung thermoplastischer Pulverlacke (nicht erfindungsgemäß)

In einem 11-Reaktor mit Wasserabscheider werden 300 g Oligomerengemisch aus Beispiel 3, als Wärmeüberträgeröle 150 g Isopar P und 150 g Isopar L sowie Antaron V 220 ( Mengen siehe Tabelle 2) als Dispersionsstabilisator und 100 mg Antimontrioxid als Veresterungskatalysator eingewogen. Der Reaktor wird mit einem Wasserabscheider verbunden. Anschließend wird die Reaktionsmischung unter kräftigem Rühren auf eine Innentemperatur von 217°C (Siedebeginn der Wärmeträgeröle) erhitzt. Etwa 20 °C unterhalb des Siedepunktes des Wärmeüberträgers beginnt die Destillation (t = 0 min). Es wird 4h bei einer Innentemperatur von 217 bis 218°C destilliert. Dabei werden ca. 82 ml eines Gemisches aus Ethylenglykol, Neopentylglykol und Diethylenglykol durch azeotrope Destillation mit dem Wärmeüberträger abdestilliert. Die Hauptmenge des Destillates besteht aus Ethylenglykol.
Anschließend entfernt man das Wärmebad und läßt die Mischung unter Rühren abkühlen. In dem Temperaturintervall zwischen 200 und 160 °C werden die in Tabelle 2 angegebenen Mengen an Pigment bzw. Farbstoff, dispergiert in wenig Isopar L, zudosiert. Die Mischung wird weiter auf Raumtemperatur unter Rühren abgekühlt.

Das Polyesterpulver wird durch Filtration vom Wärmeüberträgeröl getrennt. Zur Entfernung von anhaftendem Wärmeüberträgeröl werden die Polyesterpartikel dreimal mit Isohexan gewaschen und anschließend bei 30 °C/0,1 mbar für 3h getrocknet. Man erhält gefärbte kugelförmige Partikel mit den in Tabelle 2 aufgeführten mittleren Partikelgrößen und - verteilungen. Die Ausbeute an Pulver beträgt zwischen 95 und 98 % der Theorie.

**Tabelle 2**

| Nr. | Antaronmenge [g] | Pigment (P) / Farbstoff (F) | Mittlere Partikelgröße (d50) [µ] | Span der Partikelgrößenverteilung | Filmdicke [µ] |
|---|---|---|---|---|---|
| 1 | 3.0 | (P) Hostaperm* Violett RI (3.2 g) | 19 | 2.0 | 15 |
| 2 | 3.0 | (F)Hostasol Rot* GG (2,4 g) | 44 | 2.4 | 35 |
| 3 | 2,3 | (P) PV Echtgelb HGR* (3.6 g) | 12 | 1.9 | 15 |
| 4 | 2,3 | (P) PV Echtgelb HGR* (11.8g) | 32 | 1.3 | 24 |
| 5 | 2.3 | (P) PV Echtblau A2R* (11 ,8 g) | 34 | 1.3 | 26 |
| 6 | 2,3 | (F) Polysynthren Blau * (2.3 g) | 36 | 2.4 | 28 |

Die Pulver wurden elektrostatisch auf metallische Oberflächen aufgesprüht und für 10 min. bei 180 °C aufgeschmolzen. Man erhält gut haftende, homogene Überzüge mit einer ausgezeichneten Oberflächengüte. Die Schichtdicken der Filme sind in Tabelle 2 aufgeführt.

## Patentansprüche

1. Polyesterpartikel mit einer mittleren Partikelgröß,e < 50µm **dadurch gekennzeichnet, daß** die Polymerpartikel einen vernetzbaren funktionellen Polyester und mindestens ein mehrfunktionelles Vernetzungsmittel oder ein Epoxidharz enthalten, homogen gefärbt und kugelförmig sind, eine monomodale Partikelgrößenverteilung mit einem Span (d90-d10/d50) ≤ 2,5 besitzen und die bei Temperaturen <200°C zu einem kontinuierlichen Überzug aufgeschmolzen werden können.

2. Polyesterpartikel nach Anspruch 1, **dadurch gekennzeichnet, daß** sie ein Molekulargewicht Mn im Bereich von 500 bis 50 000 besitzen.

3. Polyesterpartikel nach Anspruch 1 und/oder 2, **dadurch gekennzeichnet, daß** sie eine monomodale Partikelgrößenverteilung mit einem Span (=d90-d10/d50) ≤ 2,0 besitzen.

4. Polyesterpartikel nach mindestens einem der Ansprüche 1 bis 3, **dadurch gekennzeichnet, daß** sich mit Ihnen Beschichtungen mit einer Dicke im Bereich < 50 µm herstellen lassen.

5. Polyesterpartikel nach mindestens einem der Ansprüche 1 bis 4, **dadurch gekennzeichnet, daß** diese Einheiten der Formeln (1) und (2) enthalten
-CO-X-CO (1) -O-D-O- (2)
wobei
X für einen substituierten oder unsubstituierten C₆ bis C₁₄ - aromatischen Rest oder einen Alkylen-, Polymethylen-, Cycloalkan- oder Dimethylencycloalkangruppe oder eine geradkettige oder verzweigte, gegebenenfalls ungesättigte Alkandiyl-Gruppe steht und
D eine Alkylen-, Polymethylen-, Cycloalkan-, Dimethylencycloalkangruppe oder eine geradkettige oder verzweigte, gegebenenfalls ungesättigte Alkandiyl-Gruppe bedeutet.

6. Verwendung der Polyesterpartikel nach mindestens einem der Ansprüche 1 bis 5 für Pulverlackbeschichtungen.

7. Verfahren zur Herstellung von kugelförmigen, homogen gefärbten Polyesterpartikeln die eine monomodale Partikelgrößenverteilung mit einem Span (=d90-d10/d50) ≤ 2,5 besitzen
a. durch Dispergieren der Ausgangsstoffe für ein Polyesterbindemittel in einem inerten hochsiedenden Wärmeträger, der maximal 2 Gew% aromatische Bestandteile enthält, bei einer Temperatur, die mindestens so hoch ist wie die Erweichungstemperatur der Ausgangsstoffe in Gegenwart mindestens eines polymeren Dispersionsstabilisators, der ein amphiphiles Copolymer oder eine oberflächenmodifizierte anorganische Verbindung ist und
b. anschließendes Erhitzen der Reaktionsmischung auf eine Temperatur im Bereich von 120 bis 280°C, unter gleichzeitiger Abführung der Kondensationsnebenprodukte, bis der Polyester ein Molekulargewicht im Bereich von 500 bis 20 000 besitzt,
c. darauffolgende Zugabe von Füllstoffen, Farbstoffen und/oder Pigmenten und gegebenenfalls weiterer Additive bei einer Temperatur im Bereich von 140 bis 220°C und
d. im Falle von vernetzbaren funktionellen Polyestern darauffolgende Abkühlung der Reaktionsmischung auf eine Temperatur im Bereich von 60 bis 140 °C und Zugabe mindestens eines mehrfunktionellen Vemetzungsmittels oder Epoxidharzes und
e. weitere Absenkung der Temperatur in einen Bereich, der unterhalb der Erweichungstemperatur des Polyester liegt und Abtrennung der erhaltenen kugelförmigen, homogen gefärbten Polyesterpartikel.

8. Verfahren nach Anspruch 7, **dadurch gekennzeichnet, daß** als Ausgangsstoffe Verbindungen eingesetzt werden, die Einheiten der Formeln (1) und (2) enthalten
-CO-X-CO (1) -O-D-O- (2)
wobei
X für einen substituierten oder unsubstituierten C₆ bis C₁₄ -aromatischen Rest oder eine Alkylen-, Polymethylen-, Cycloalkan- oder Dimethylencycloalkangruppe oder eine geradkettige oder verzweigte, gegebenenfalls ungesättigte Alkandiyl-Gruppe steht und
D eine Alkylen-, Polymethylen, Cycloalkan-, Dimethylencycloalkangruppe oder eine geradkettige oder verzweigte, gegebenenfalls ungesättigte Alkandiyl-Gruppe bedeutet.

9. Verfahren nach Anspruch 7 und/oder 8, **dadurch gekennzeichnet, daß** die Ausgangstoffe in Schritt (a.) auf eine Temperatur im Bereich von 150 bis 280°C erhitzt werden.

10. Verfahren nach mindestens einem der Ansprüche 7 bis 9, **dadurch gekennzeichnet, daß** der verwendete Wärmeträger einen Siedepunkt im Bereich von 150 bis 300°C besitzt.

11. Verfahren nach mindestens einem der Ansprüche 7 bis 10, **dadurch gekennzeichnet, daß** der Vernetzungsmittelgehalt im Bereich von 5 bis 20 Gew. %, bezogen auf die Ausgangsstoffe, beträgt.

12. Verfahren nach mindestens einem der Ansprüche 7 bis 11, **dadurch gekennzeichnet, daß** die Füllstoffe, Farbstoffe oder Pigmente vor der Zugabe in Schritt c) in Gegenwart ausreichender Mengen Dispersionsstabilisator in dem verwendeten Wärmeträger dispergiert und auf die Temperatur der Reaktionsmischung vorgewärmt werden.

13. Verfahren nach mindestens einem der Ansprüche 7 bis 12, **dadurch gekennzeichnet, daß** die in Schritt c) zugegebenen Farbstoffe oder Pigmente eine Temperaturbeständigkeit bis mindestens 200 °C besitzen.

14. Verfahren nach mindestens einem der Ansprüche 7 bis 13, **dadurch gekennzeichnet, daß** als Dispersionsstabilisator ein amphiphiles Copolymer eingesetzt wird.

15. Verfahren nach mindestens einem der Ansprüche 7 bis 14, **dadurch gekennzeichnet, daß** als Dispersionsstabilisator ® Antaron V 220 eingesetzt wird.

16. Verfahren nach mindestens einem der Ansprüche 7 bis 15, **dadurch gekennzeichnet, daß** anschließend an Schritt b) nach Erreichung des gewünschten Molekulargewichtes zur Erhöhung der Funktionalität des Polyesters mehrfunktionelle Komponenten zugegeben werden.

17. Verfahren nach mindestens einem der Ansprüch 7 bis 16, **dadurch gekennzeichnet, daß** nach Abschluß der Kondensation in Schritt (b) die Reaktionsmischung auf 160°C bis 200°C abgekühlt wird und zur Optimierung der Beschichtungseigenschaften des Polyesters entsprechende Additive zugegeben werden.

18. Verfahren nach mindestens einem der Ansprüche 7 bis 17, **dadurch gekennzeichnet, daß** die erhaltenen Polyester ein Molekulargewicht Mn im Bereich von 500 bis 50.000 aufweisen.

19. Verfahren nach mindestens einem der Ansprüche 7 bis 18, **dadurch gekennzeichnet, daß** die Polyesterpartikel in Pulverform anfallen.

20. Verfahren nach mindestens einem der Ansprüche 7 bis 19, **dadurch gekennzeichnet, daß** die erhaltenen Polyesterpartikel eine monomodale Partikelgrößenverteilung mit einem Span (d90-d10/d50) von ≤ 2,5 besitzen.

21. Verfahren nach mindestens einem der Ansprüche 7 bis 20, **dadurch gekennzeichnet, daß** sich mit den erhaltenen Polyesterpartikeln Pulverlackbeschichtungen mit einer Beschichtungsdicke < 50 µm herstellen lassen.

22. Kugelförmige, homogen gefärbte Polyesterpartikel enthaltend einen vernetzbaren funktionellen Polyester und mindestens ein mehrfunktionelles Vernetzungsmittel oder ein Epoxidharz mit einer mittleren Partikelgröße < 50 µm, **dadurch gekennzeichnet, daß** sie mit einem Verfahren nach einem oder mehreren der Ansprüche 7 bis 21 hergestellt wurden.

## Claims

1. Polyester particles having an average particle size of <50 µm, **characterised in that** the polymer particles contain a cross-linkable functional polyester and at least one polyfunctional cross-linking agent or an epoxy resin, are homogeneously coloured and spherical, have a monomodal particle size distribution with a span (d90-d10/d50) of ≤2.5 and may be fused at temperatures of <200°C to yield a continuous coating.

2. Polyester particles according to claim 1, **characterised in that** they have a molecular weight Mn in the range from 500 to 50,000.

3. Polyester particles according to claim 1 and/or 2, **characterised in that** they have a monomodal particle size distribution with a span (=d90-d10/d50) of ≤2.0.

4. Polyester particles according to at least one of claims 1 to 3, **characterised in that** coatings of a thickness of <50 µm may be produced therewith.

5. Polyester particles according to at least one of claims 1 to 4, **characterised in that** they contain units of the formulae (I) and (2)
-CO-X-CO (1) -O-D-O- (2)
wherein
X denotes a substituted or unsubstituted C₆ to C₁₄ aromatic residue or an alkylene, polymethylene, cycloalkane, dimethylenecycloalkane group or a linear or branched, optionally unsaturated alkanediyl group and
D means an alkylene, polymethylene, cycloalkane, dimethylenecycloalkane group or a linear or branched, optionally unsaturated alkanediyl group.

6. Use of the polyester particles according to at least one of claims 1 to 5 for powder coatings.

7. A process for the production of spherical, homogeneously coloured polyester particles which have a monomodal particle size distribution with a span (=d90-d10/d50) of ≤2.5
a. by dispersing the starting materials for a polyester binder in an inert, high-boiling heat-transfer medium, which contains at most 2 wt-% of aromatic constituents, at a temperature which is at least as high as the softening temperature of the starting materials in the presence of at least one polymeric dispersion stabiliser, which is an amphiphilic copolymer or a surface-modified inorganic compound, and
b. subsequently heating the reaction mixture to a temperature in the range from 120 to 280°C with simultaneous removal of the secondary products of condensation until the polyester has a molecular weight in the range from 500 to 20,000,
c. subsequently adding extenders, dyes and/or pigments and optionally further additives at a temperature in the range from 140 to 220°C and,
d. in the case of cross-linkable functional polyesters, then cooling the reaction mixture to a temperature in the range from 60 to 140°C and adding at least one polyfunctional cross-linking agent or epoxy resin and
e. further reducing the temperature to a range which is below the softening temperature of the polyester and separating the spherical, homogeneously coloured polyester particles obtained.

8. A process according to claim 7, **characterised in that** the starting materials used are compounds containing units of the formulae (1) and (2)
-CO-X-CO (1) -O-D-O- (2)
wherein
X denotes a substituted or unsubstituted C₆ to C₁₄ aromatic residue or an alkylene, polymethylene, cycloalkane, dimethylenecycloalkane group or a linear or branched, optionally unsaturated alkanediyl group and
D means an alkylene, polymethylene, cycloalkane, dimethylenecycloalkane group or a linear or branched, optionally unsaturated alkanediyl group.

9. A process according to claims 7 and/or 8, **characterised in that** the starting materials are heated to a temperature in the range from 150 to 280°C in step (a.).

10. A process according to at least one of claims 7 to 9, **characterised in that** the heat-transfer medium used has a boiling point in the range from 150 to 300°C.

11. A process according to at least one of claims 7 to 10, **characterised in that** the cross-linking agent content is in the range from 5 to 20 wt-%, relative to the starting materials.

12. A process according to at least one of claims 7 to 11, **characterised in that**, prior to addition in step c), the extenders, dyes or pigments are dispersed in the heat-transfer medium used in the presence of sufficient quantities of dispersion stabiliser and are preheated to the temperature of the reaction mixture.

13. A process according to at least one of claims 7 to 12, **characterised in that** the dyes or pigments added in step c) have a temperature resistance of at least 200°C.

14. A process according to at least one of claims 7 to 13, **characterised in that** an amphiphilic copolymer is used as the dispersion stabiliser.

15. A process according to at least one of claims 7 to 14, **characterised in that** ®Antaron V 220 is used as the dispersion stabiliser.

16. A process according to at least one of claims 7 to 15, **characterised in that**, subsequent to step b), once the desired molecular weight has been achieved, polyfunctional components are added to increase the functionality of the polyester.

17. A process according to at least one of claims 7 to 16, **characterised in that**, after completion of the condensation in step (b), the reaction mixture is cooled to 160°C to 200°C and appropriate additives are added to optimise the coating properties of the polyester.

18. A process according to at least one of claims 7 to 17, **characterised in that** the polyesters obtained exhibit a molecular weight Mn in the range from 500 to 50,000.

19. A process according to at least one of claims 7 to 18, **characterised in that** the polyester particles are in powder form.

20. A process according to at least one of claims 7 to 19, **characterised in that** the polyester particles obtained have a monomodal particle size distribution with a span (d90-d10/d50) of ≤2.5.

21. A process according to at least one of claims 7 to 20, **characterised in that** powder coatings with a coating thickness of <50 µm may be produced with the polyester particles obtained.

22. Spherical, homogeneously coloured polyester particles containing a cross-linkable, functional polyester and at least one polyfunctional cross-linking agent or an epoxy resin with an average particle size of <50 µm, **characterised in that** they were produced using a process according to one or more of claims 7 to 21.

## Revendications

1. Particules de polyester avec une taille de particule moyenne < 50µm, **caractérisées en ce que** les particules polymères comprennent un polyester fonctionnel réticulable et au moins un agent de réticulation multifonctionnel ou une résine époxy, **en ce qu'**elles sont sphériques et ont une coloration homogène, **en ce qu'**elles présentent une répartition monomodale de la taille de particule avec un Span (d90-d10/d50) < 2,5, et **en ce qu'**elles peuvent être fondues à des températures < 200°C pour former un revêtement continu.

2. Particules de polyester selon la revendication 1, **caractérisées en ce qu'**elles ont un poids moléculaire Mn compris entre 500 et 50000.

3. Particules de polyester selon la revendication 1 et/ou 2, **caractérisées en ce qu'**elles ont une répartition monomodale de la taille de particule avec un Span (d90-d10/d50) < 2,0.

4. Particules de polyester selon au moins l'une des revendications 1 à 3, **caractérisées en ce qu'**on peut fabriquer avec elles des revêtements ayant une épaisseur dans la plage < 50 µm.

5. Particules de polyester selon au moins l'une des revendications 1 à 4, **caractérisées en ce que** ce qu'elles comprennent des unités selon les formules (1) et (2)
-CO-X-CO (1) -O-D-O- (2)
où X représente un résidu aromatique substitué ou non substitué en C₆ à C₁₄ ou un groupe alkylène, polyméthylène, cycloalcane, diméthylène-cycloalcane ou un groupe alcane-diyle à chaîne droite ou ramifiée, éventuellement non saturé, et
D représente un groupe alkylène, polyméthylène, cycloalcane, diméthylène-cycloalcane ou un groupe alcane-diyle à chaîne droite ou ramifiée, éventuellement non saturé.

6. Utilisation des particules de polyester selon au moins l'une des revendications 1 à 5 pour des revêtements de laques en poudre.

7. Procédé pour la fabrication de particules de polyester sphériques de coloration homogène, qui présentent une répartition monomodale de la taille de particule avec un Span (d90-d10/d50) < 2,5
a. par dispersion des substances de base pour un liant de polyester dans un agent caloporteur inerte à point d'ébullition élevé, qui contient au maximum 2% en poids de composants aromatiques, à une température qui est au moins aussi élevée que la température de ramollissement des substances de base en présence d'au moins un stabilisant de dispersion polymère, qui est un copolymère amphiphile ou un composé inorganique modifié superficiellement et
b. par réchauffage ultérieur du mélange de réaction à une température comprise entre 120°C et 280°C en évacuant simultanément les sous-produits de condensation jusqu'à ce que le polyester ait un poids moléculaire compris entre 500 et 20000,
c. par ajout ultérieur de charges, de colorants et/ou de pigments et éventuellement d'autres additifs à une température comprise entre 140°C et 220°C et
d. puis, dans le cas de polyesters fonctionnels réticulables, par refroidissement du mélange de réaction jusqu'à une température comprise entre 60°C et 140°C et ajout d'au moins un agent de réticulation multifonctionnel ou d'une résine époxy et
e. diminution de la température jusqu'à une plage inférieure à la température de ramollissement du polyester et séparation des particules de polyester sphériques, de coloration homogène, obtenues.

8. Procédé selon la revendication 7, **caractérisé en ce que** les composés utilisés comme substances de base comprennent des unités selon les formules (1) et (2)
-CO-X-CO (1) -O-D-O- (2)
où
X représente un résidu aromatique substitué ou non substitué en C₆ à C₁₄ ou un groupe alkylène, polyméthylène, cycloalcane, diméthylène-cycloalcane ou un groupe alcane-diyle à chaîne droite ou ramifiée, éventuellement non saturé, et
D représente un groupe alkylène, polyméthylène, cycloalcane, diméthylène-cycloalcane ou un groupe alcane-diyle à chaîne droite ou ramifiée, éventuellement non saturé.

9. Procédé selon la revendication 7 et/ou 8, **caractérisé en ce que** les substances de base sont réchauffées, au cours de l'étape (a.) à une température comprise entre 150°C et 280°C.

10. Procédé selon au moins l'une des revendications 7 à 9, **caractérisé en ce que** l'agent caloporteur utilisé a un point d'ébullition compris entre 150°C et 300°C.

11. Procédé selon au moins l'une des revendications 7 à 10, **caractérisé en ce que** la teneur en agent de réticulation est comprise entre 5% et 20% en poids rapportée aux substances de base.

12. Procédé selon au moins l'une des revendications 7 à 11, **caractérisé en ce que** les charges, les colorants ou les pigments sont dispersés dans l'agent caloporteur utilisé, avant leur ajout au cours de l'étape c), en présence de quantités suffisantes de stabilisant de dispersion et préchauffés à la température du mélange de réaction.

13. Procédé selon au moins l'une des revendications 7 à 12, **caractérisé en ce que** les colorants ou pigments ajoutés au cours de l'étape c) ont une résistance à la chaleur allant jusqu'à 200°C au moins.

14. Procédé selon au moins l'une des revendications 7 à 13, **caractérisé en ce que** l'on utilise comme stabilisateur de dispersion un copolymère amphiphile.

15. Procédé selon au moins l'une des revendications 7 à 13, **caractérisé en ce que** l'on utilise comme stabilisant de dispersion ®Antaron V 220.

16. Procédé selon au moins l'une des revendications 7 à 15, **caractérisé en ce que**, après l'étape b), après obtention du poids moléculaire souhaité, des composants multifonctionnels sont ajoutés pour augmenter la fonctionnalité du polyester.

17. Procédé selon au moins l'une des revendications 7 à 16, **caractérisé en ce que**, une fois la condensation terminée au cours de l'étape (b), le mélange de réaction est refroidi jusqu'entre 160°C et 200°C et **en ce que** des additifs appropriés sont ajoutés pour optimiser les propriétés d'enduction du polyester.

18. Procédé selon au moins l'une des revendications 7 à 17, **caractérisé en ce que** les polyesters obtenus ont un poids moléculaire Mn compris entre 500 et 50000.

19. Procédé selon au moins l'une des revendications 7 à 18, **caractérisé en ce que** les particules de polyester résultantes sont sous forme de poudre.

20. Procédé selon au moins l'une des revendications 7 à 19, **caractérisé en ce que** les particules de polyester obtenues ont une répartition monomodale de la taille de particule (d90-d10/d50) de < 2,5.

21. Procédé selon au moins l'une des revendications 7 à 20, **caractérisé en ce que** des revêtements de laques en poudre ayant une épaisseur < 50 µm peuvent être fabriqués avec les particules de polyester obtenues.

22. Particules de polyester sphériques, de coloration homogène, comprenant un polyester fonctionnel réticulable et au moins un agent de réticulation multifonctionnel ou une résine époxy, avec une taille de particule moyenne < 50µm, **caractérisées en ce qu'**elles ont été fabriquées à l'aide d'un procédé selon l'une ou plusieurs des revendications 7 à 21.
